# EUROPEAN PATENT SPECIFICATION

(11) **EP 1 509 716 B1**
(45) Date of publication and mention of the grant of the patent: **02.01.2008**
(21) Application number: 03735806.6
(22) Date of filing: 23.05.2003
(51) Int. Cl.: F16K 31/06, F16K 31/08

(54) **PIVOTING ELECTROMAGNETIC ACTUATOR AND INTEGRATED ACTUATOR AND FLUID FLOW CONTROL VALVE**
SCHWENKANTRIEB, INTEGRIERTER ANTRIEB UND DURCHFLUSSREGELVENTIL
ACTIONNEUR ELECTROMAGNETIQUE PIVOTANT, ACTIONNEUR INTEGRE ET VANNE DE REGULATION D'ECOULEMENT DE FLUIDE

(30) Priority: 31.05.2002 GB 0212656; 04.07.2002 GB 0215465; 10.05.2003 GB 0310835
(43) Date of publication of application: 02.03.2005
(73) Proprietor: Camcon Ltd., Cambridge CB4 4WS (GB)
(72) Inventor: WYGNANSKI, Wladyslaw, Cambridge CB4 2SL (GB)
(74) Representative: Nash, Keith Wilfrid
(86) International application number: PCT/GB2003/002258
(87) International publication number: WO 2003/102454

(56) References cited:
- AU-A- 6 623 801
- DE-U- 29 711 175
- GB-A- 1 348 671
- US-A- 4 621 660
- US-B1- 6 220 299

## Description

### Field of Invention

This invention concerns electromagnetic actuators and in particular a design of actuator which can be integrated into a fluid flow control valve.

### Background to the invention

UK 1,513,966 describes electromagnetic switching devices, Figs 10 and 11 of which show such a device in which an armature 3 can rock between two points under the influence of electric current produced changes in the flux linking the armature and four poles 6, 6' 7 and 7'. In Fig 11 springs are shown permanently linking one end of the armature two of the poles, to centre the armature between the poles. Examples of the centring springs are shown in Figs 12 and 13.

In both devices shown in Figs 10 and 11 of UK 1,513,966 a layer of non-magnetic material from which the coil bobbin is constructed, exists between the ends of the magnets and the magnetic material forming the poles 6, 6', 7 and 7' respectively. This significantly weakens the flux density available to attract and hold the armature in contact with poles 6 and 7' (or 6' and 7). In fact, unless current is flowing in the solenoid coil of the Fig 11 device, the armature appears to be held by the centring springs midway between the poles, out of contact therewith. That device is therefore not a truly bistable device, but can adopt an intermediate third state, in which the armature makes no contact with any of the poles. In fact since the springs shown centre the armature in the absence of current in the coil, the forces exerted by the springs on the armature are greater than the force of attraction due to the permanent magnet, and it is only when the magnetic force acting on the armature is increased by the flux due to the current flowing in the coil, that the spring forces are overcome and the armature will move into contact with one or the other set of poles 6 and 7' or 6' and 7.

An electromagnetic actuator is described in US Patent Specification 4,621,660 which employs permanent magnets, a pivoting armature and a winding through which an electric current is passed to shift the armature from one position to another. The armature cooperates with ports and passages in a housing containing the actuator so as to cover and uncover openings therein to control the flow of fluid from one passage to another. However no attempt is made to store energy during armature movement, subsequently to accelerate the armature in transit between its two positions. The actuator does not therefore have a fast response time. In addition the armature will impact against the newpoles as it transfers from one pair of poles to the other, and this can introduce significant wear and shorten the life of the device.

DE 29711175 describes an actuator which includes a bi-stable rocking armature (17) which is movable between two home positions each defined by a pair of poles (18, 19, 20, 21) by altering magnetic flux created by at least one permanent magnet (26) and linking the armature (17) and the poles (18, 19, 20, 21) when it occupies one of its home positions. This causes the armature (17) to rock like a see-saw into the other of its home positions, in each of which a closed low reluctance path for the magnetic flux linking the armature (17) and two of the poles (18, 19, 20, 21) is created. The permanent magnetic flux alone which links the armature (17) in either home position, is sufficient to cause the armature to remain in that position in contact with those two poles (18, 19, 20, 21) (see page 5, lines 23-26) until the flux linking the armature to those two poles (18, 19, 20, 21) is altered so as to cause the armature to disengage therefrom and see-saw over to the other two poles (20, 21, 18, 19), where it will remain due to the closed low reluctance path now established with these other two poles (20, 21, 18, 19).

### Object of the invention

It is an object of the present invention to provide an improved form of actuator and an improved integrated actuator and fluid flow control valve.

### Summary of the invention

According to one aspect of the present invention there is provided a fluid flow control valve in which an armature is mounted for pivoting in a fluid tight chamber to which or from which fluid can flow via a first passage, and the armature comprises the fluid flow controlling device and can adopt either of two home positions in each of which it is held in contact with two magnetic poles by magnetic flux provided by a permanent magnet, wherein the armature is caused to pivot from one home position to the other by temporarily altering the magnetic flux linking the armature and the poles so that the armature is repelled from poles with which it is in contact and attracted to poles defining the other home position, and wherein a second fluid passage is provided through one of the poles which communicates with an opening in the pole face which is covered by the armature so as to prevent fluid flow between the second passage and the chamber when the latter is in one of its two home positions but is uncovered to permit fluid flow through the second passage when the armature occupies its other home position.

A third fluid passage leading to a second opening may be provided in another pole, which second opening will be covered when the armature occupies its said other home position.

In a preferred embodiment four similar pole-pieces are arranged in two pairs, associated with opposite ends of the armature, each pair presenting a North and South pole to the armature, and the two pairs are arranged symmetrically about the central pivoting axis of the armature and at least one permanent magnet is linked to the pole-pieces to provide a permanent magnetic flux so that the two poles on one side of the armature have the same magnetic polarity as do the two poles on the other side of the armature.

In another embodiment also comprising four similar pole-pieces symmetrically arranged in two pairs as aforesaid, the poles are linked by magnetic material to form a flux path between the two poles on one side of the armature and the two poles on the other side of the armature, and the armature includes at least one permanent magnet to provide a permanent magnetic flux and create a North pole at one end and a South pole at the other end of the armature.

Preferably all four poles have a similar passage therein so as to have a similar magnetic cross-section, although where a passage is not required to convey fluid to or from the chamber, it need not extend completely through the pole.

Advantageously the passages in the pair of poles not required for fluid flow serve to house energy storing springs each of which will be compressed to store energy as the armature approaches the pole containing the spring, but from which the armature becomes disengaged as it pivots towards the other pole

The poles comprise stops which limit the pivoting movement of the armature.

The armature may be mounted for rocking about a ridge defining a fulcrum, or between an opposed pair of such ridges or for pivoting about an axis defined by a pin about which the armature can rotate.

In the preferred embodiment the armature extends in an axial sense through an electromagnet having a winding through which electric current can flow and is polarised magnetically in one sense when a current flows in one direction in the winding and in an opposite sense when a current flows in the opposite direction.

In the said other embodiment the magnetic material linking the poles comprises at least in part the core of an electromagnet having a winding through which current flow in one sense will alter the magnetic flux so as to reverse the polarity of the poles previously magnetised by the permanent magnet flux from the armature magnet, so as to cause the armature to be repelled from the poles with which it is in contact and be attracted to the other two poles.

By ensuring that the residual permanent magnet flux linking the armature in each home position is sufficient to hold the armature in that home position, the device has a bistable characteristic, and it is merely necessary to cause a pulse of current to flow in the electromagnet winding in the appropriate direction, to cause the armature to pivot from one home position to the other, where it will remain due to the residual permanent magnet flux linking it to the other poles to which it has moved.

Preferably a closed flux path for the permanent magnet flux is created when the armature occupies either of its two home positions.

The movement of the armature may also be employed to open or close a second valve external to the device, or to open and close an electrical switch or perform a mechanical function externally of the device, and may act directly or indirectly thereon.

In a preferred arrangement a push rod can extend through a passage in one of the poles for conveying armature movement externally of the device.

Preferably the push rod is of non-magnetic material.

The push rod can extend through one or other of the poles containing a fluid conveying passage or through a passage containing an energy storing spring and may be linked to the spring to be urged by the spring towards the armature, stop means preventing the push rod from following the armature all the way to its mid position between the poles so that the armature is free of spring influence over part of its travel from between the poles.

The invention also lies in an actuator which includes a bi-stable rocking armature which is movable between two home positions each defined by a pair of poles, by altering magnetic flux created by a permanent magnet and linking the armature and the poles when it occupies one of its home positions, so as to cause the armature to rock like a see-saw into the other of its two home positions, in each of which a closed low reluctance path for magnetic flux linking the armature and two of the poles is created, the permanent magnetic flux linking the armature in either home position causing it to remain in that position in contact with those two poles until the flux linking the armature to those two poles is altered so as to cause the armature to disengage therefrom and see-saw over to the other two poles, where it will remain due to the low reluctance path now established with these other two poles, wherein part of the magnetic force of attraction between the armature and poles is converted into potential energy and stored while the armature remains in either home position to be available to exert an accelerating force on the armature in a direction away from that home position towards its other home position when the magnetic flux is altered so as to cause the armature to disengage from the poles defining that home position.

Energy may be stored in a resiliently deformable device such as a spring.

Preferably two springs are provided one compressed as the armature moves into engagement with one pole and the other of which is compressed as the armature moves into engagement with the other pole.

The poles comprise stops which limit the rocking see-saw movement of the armature.

The armature may be mounted to rock about a ridge defining a fulcrum, or between an opposed pair of such ridges or to pivot about an axis defined by a pin about which the armature can rotate

The force exerted by the stored energy is arranged to be less than the force of attraction due to the flux linking the armature and pole piece once the low reluctance path has been established.

Typically the flux alteration required to effect the changeover of the armature from one pole to the other is effected by causing a short pulse of current to flow through an electromagnet winding which influences the flux linking the armature and the poles, the direction of the current in each pulse to effect each changeover, being selected accordingly.

In one arrangement in which the or each permanent magnet forms part of the low reluctance path outwith the armature, an electromagnet winding surrounds the armature, so as to reverse the magnetic polarity of the armature otherwise caused by permanent magnet originating flux, when a current flows in one direction in the winding.

In another embodiment in which the or each permanent magnet forms part of the armature, the core of the electromagnet preferably forms part of the low reluctance flux path between the poles so that when energised, the flux created by the current flowing in the winding reverses the magnetic polarity of the poles from that created by the permanent magnetic flux, to cause the repulsion of the armature therefrom.

In either embodiment the reversal of the magnetic polarity of the armature, or the poles to which it is attracted, causes the armature to be repelled from the poles to which it was hitherto attracted, and to become attracted to the other two poles.

Resilient spring means may be associated with one or both ends of the armature.

In a preferred arrangement the spring means is associated with and held captive in a recess in the end face of each of one of the pairs of poles. A thrust member may protrude beyond each said end face for engagement by the armature to transmit armature movement to compress the spring means and vice versa.

One end of the armature, as measured from the axis about which the armature rocks, may be longer than the other so that the distance moved by the one end of the armature is greater than that of its other end.

Alternatively one end of the armature may be extended by an elongate element which need not be of magnetisable material, so that the end of the elongate element moves through a greater distance than does either end of the armature itself.

An elongate spring may be attached to the armature so as to extend beyond one or both ends of the armature or be attached to the housing or a member attached to the housing. The or each spring comprises a length of resilient material which extends from the armature to protrude from the end thereof, and may be a length of spring steel. The (or each) spring may be secured in any convenient manner at its end remote from the armature but preferably is held captive in such a way that the length of spring material beyond the armature is bent so as to describe one or other of two catenaries and can flex and flip from one catenary to the other to allow the armature to rock about the ridge (or ridges), and as the spring is deflected with armature movement so energy is stored in the spring whose deflection will tend to resist movement of the armature towards its home positions.

The captive end of the or each spring may be received in a socket in the housing or in blocks fixed in, or to, the housing.

The movement of the armature can be used to open and close a valve, or open and close an electrical switch, or perform a mechanical function, and may act directly or indirectly thereon.

In a preferred arrangement the recesses housing energy storing means enagagable as the armature approaches the poles may be formed in passages through the poles.

The actuator may be located within a housing and a passage in each of one or more poles can communicate with a passage or passages in the housing for conveying fluid to or from the housing, and through which fluid flow will be prevented by engagement of the armature with a pole containing a passage.

A push rod engagable by the armature, for conveying armature movement externally of the device, can pass through a passage in a pole, so that armature movement can operate an externally located switch or valve or other device. The push rod may extend freely through the passage especially if used for conveying fluid, or may be a sliding fit therein.

The push rod may instead extend through a passage containing an energy absorbing spring and may to advantage be linked to the spring so as to be urged thereby towards the armature, and stop means is provided to prevent the push rod from following the armature all the way to its mid position between the poles so that the armature is free of spring influence over part of its travel between poles.

According to another aspect of the present invention an electromagnetic actuator includes an elongate magnetisable armature which is pivotable in a see-saw manner between two home positions in contact with poles of magnetic material and in doing so passes through a mid position equidistant from the poles, but will remain in one home position or the other due to magnetic attraction between it and two of the poles, wherein a closed low reluctance path for magnetic flux is created by the armature making contact with two of the poles when in each home position, and the low reluctance path includes at least one permanent magnet the flux from which creates the force of attraction between the armature and the home position poles with which it is in contact thereby maintaining the armature in that home position, and an electromagnet is provided having a winding through which electric current can flow, which when energised by an appropriate current flow will alter the magnetic flux so as to cause the armature to be repelled from the poles it is in contact with and be attracted to the other two, so as to cause it to transfer to the other two poles, and wherein resilient energy storage means is provided which has no effect on the armature in or near its mid position but as the armature approaches the poles, resists the final movement of the armature towards the poles.

The or each permanent magnet may comprise part of the armature so as to permanently form a North pole at one end and a South pole at the other end, in which event the electromagnet is positioned so as to create magnetic flux in the low reluctance path external of the armature, so that when the current flows in one direction the magnetic poles created by the permanent magnet flux and to which the armature is attracted are reversed, causing the armature to be repelled therefrom towards the other two poles.

Alternatively the or each permanent magnet may comprise part of the low reluctance path external of the armature in which event the electromagnet is positioned relative to the armature so that when current flows in one direction magnetic flux is produced which reverses the magnetic polarity of the armature causing it to be repelled from the poles it is in contact with, and attracted towards the other two poles.

By changing the direction of current flow in the electromagnet winding during each energisation, each current pulse will shift the armature between its two home positions.

Each resilient energy storage means is selected so that it will exert an increasing force on the armature as it moves towards the pole which will decelerate the armature as it approaches the pole but is insufficient to overcome the increasing force of magnetic attraction between the armature and the pole as the former closes on the latter, thereby to reduce the impact force as the armature contacts the pole and to store energy from the deceleration of the armature which energy is available to accelerate the armature away from the pole if the magnetic flux linking the armature and pole is reduced.

The poles comprise stops which limit the rocking movement of the armature.

A ridge constituting a fulcrum may define the pivoting axis of the armature. Alternatively two such ridges may be provided, one above and the other below the armature, so as to define a rocking axis for the armature. Alternatively the armature may be mounted for pivoting about a fixed axis as defined by a pin, which typically is fixed inside the electromagnet core.

The permanent magnet, pole pieces and electromagnet, may be contained within a housing.

The housing may be formed from magnetisable material and comprise part of low reluctance magnetic flux path.

When located in a housing, movement of the armature can be transmitted externally of the housing, for example by means of a push rod.

The resilient energy storage means may act between the armature and a fixed point such as the housing or a member attached to the housing, but in a preferred configuration the resilient means acts between the armature and at least some of the poles.

The resilient energy storage means may be carried by and extend from the armature or be attached to and extend from the poles.

Preferably the resilient energy storage means is housed in recesses in two of the poles and armature engaging members protrude from the faces of the poles each of which will be engaged by the armature and pushed into its recesses to compress the resilient energy storage means therein as the armature approaches its pole.

Push rod means can extend through one or more passages in the poles for conveying armature movement externally of the device.

Preferably the push rod means is of non-magnetic material.

Where the energy storage means comprises a compressible spring, a push rod can extend through the spring and may be linked thereto to be urged by the spring towards the armature, stop means serving to prevent the push rod from following the armature all the way to its mid position between the poles so that the armature is free of spring influence over part of its travel between poles.

An actuator embodying the invention, whether stand-alone or combined with a chamber to form a fluid control valve, is essentially bi-stable in that after the permanent magnetic flux is altered to produce the pivoting see-saw action of the armature, the magnetic flux linking the armature and poles in the low reluctance path now established, will be sufficient to cause the armature to remain in that position in contact with those poles. It will remain there until the magnetic flux linking the armature and the poles is altered once again to cause the armature to disengage from those two poles and transfer back to the other two.

The flux alteration may be effected by moving a magnet (which may be a permanent magnet or an electromagnet) into the proximity of the device so as to temporarily alter the permanent magnet flux holding the armature in its one home position, to cause the armature to move to its other home position. Alternatively the flux alteration may be achieved by causing an electric current to flow albeit momentarily in a winding of an electromagnet which influences the magnetic polarity of the armature or the magnetic polarity of the two poles with which it makes contact in the one home position, to produce a repulsion between the armature and the poles it is in contact with and an attraction towards the other two.

By mounting the pole-pieces defining the poles, permanent magnet, electromagnet (where provided) and armature in a housing, and providing passages in the housing which communicate between inlet and outlet ports in the exterior of the housing and the passage in the or each pole or in a curved surface engaged by a curved surface on the armature for opening and closing same, so an integrated fluid flow control valve and actuator is formed.

The use of resilient energy storing means in an actuator (whether alone or integrated with a fluid flow control valve), significantly reduces the reaction time of the armature, (that is the time to pivot or rock like a see-saw from one home position to the other). It also increases electrical efficiency since the energy (derived from the permanent magnet flux) stored in the resiliently deformable means during the final movement of the armature into contact with the poles, reduces the electric current required to generate sufficient reverse magnetic flux to overcome the residual magnetic retention force acting on the armature, to free the armature to pivot or rock to its other home position.

When resilient energy storing means is incorporated, the armature will normally achieve its maximum speed at the middle of the changeover from one pole to the other (i.e. midway between a pair of poles defining the two home positions). After passing through the mid position and engaging the resiliently deformable means associated with the other pole a force now acts on the armature which begins to resist onward movement of the armature towards the other pole, so that the instantaneous speed of the armature thereafter is progressively reduced, and some of the kinetic energy of the armature is converted into potential energy and stored in the energy storage means as the latter is compressed to permit the armature to approach and make contact with the said other pole, and the landing of the armature in its new position in contact with the said other pole can be almost without impact.

Typically the armature is constructed from ferromagnetic material, for example mild steel, and preferably is constructed as a laminated sandwich of thin strips of ferromagnetic material in order to reduce losses caused by eddy currents.

In general the magnetic flux change to cause the armature to move to the other home position needs to oppositely magnetically polarise the armature or the static poles.

Such an arrangement is extremely beneficial securing not only fast response, requiring low driving energy, but more especially also long life span.

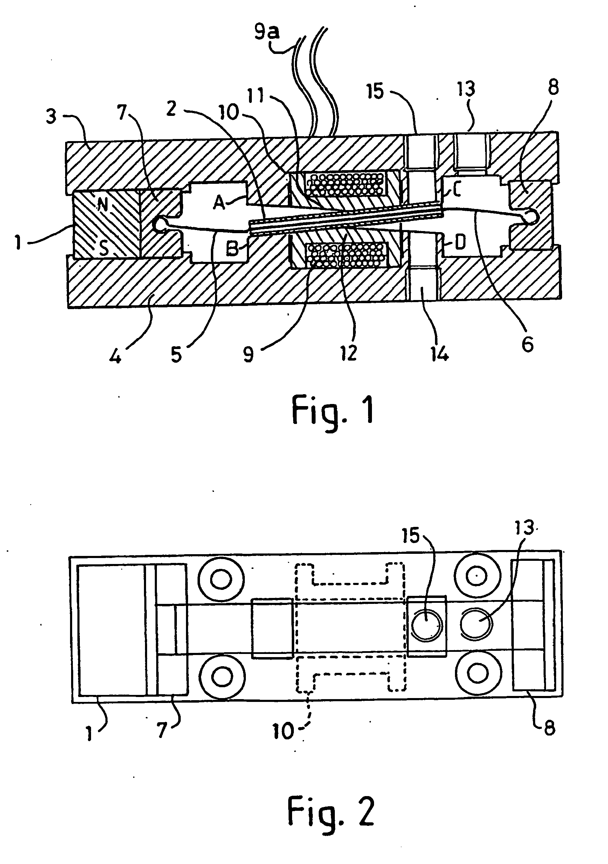

The invention will now be described by way of example with reference to the accompanying drawings, in which:-
Fig 1 is a cross-sectional side elevation of an integrated valve and magnetic actuator constructed as one embodiment of the invention, for controlling the flow of fluid between an inlet and outlet ports,
Fig 2 is a plan view of the device shown in Fig 1,

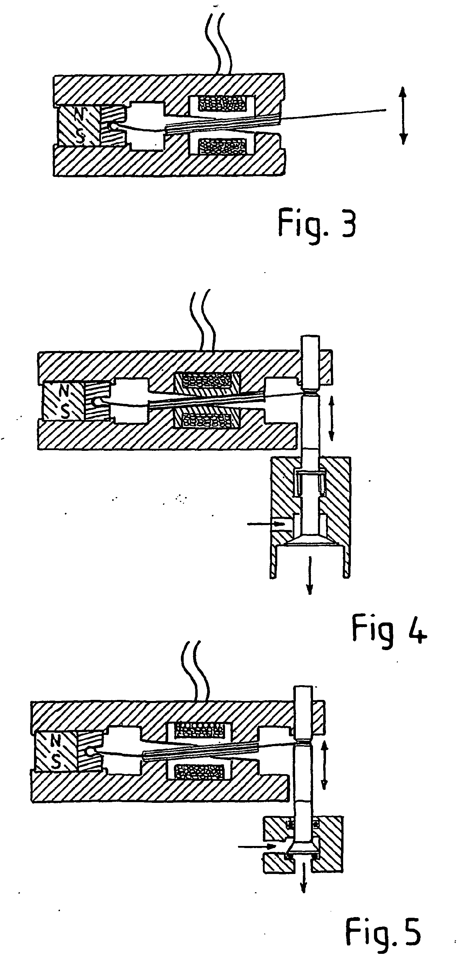

Fig 3 is a cross-sectional side elevation of a modified form of the actuator shown in Fig 1, constructed as another embodiment of the invention,
Figs 4 and 5 are cross-sectional side elevations of integrations of the actuator of Fig 3 with two different poppet valves for controlling the flow of fluid between inlet and outlet ports,

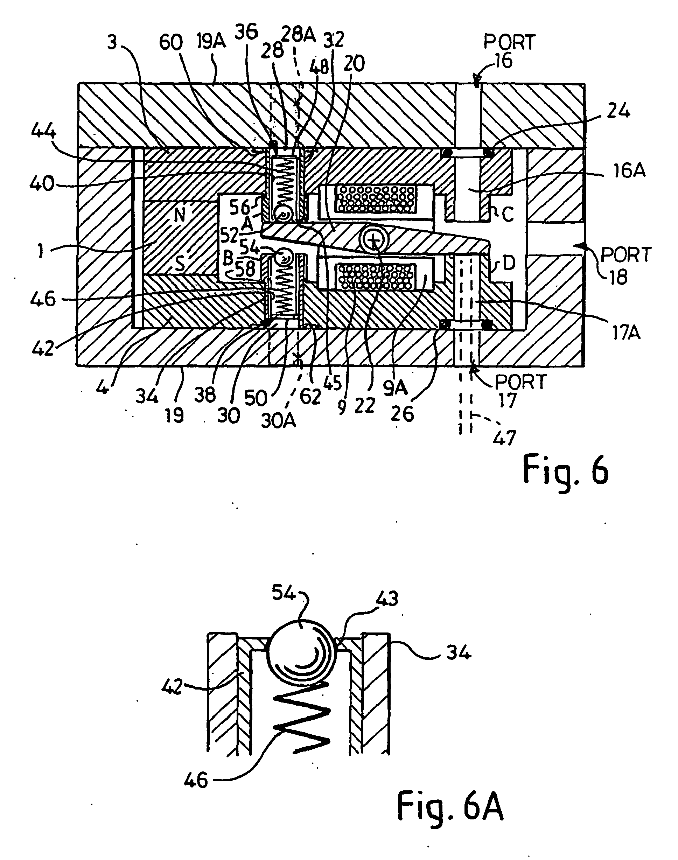

Fig 6 is a cross-sectional side elevation of another integrated valve and magnetic actuator constructed as a further embodiment of the present invention for controlling the flow of fluid between an inlet and outlet ports, and
Fig 6A is a scrap section through pole B of Fig 6.

In Figs 1 and 2 the component parts are identified as follows:-

| | |
|---|---|
| Permanent magnet | 1 |
| Rocking armature | 2 |
| Pole pieces | 3, 4 |
| Springs | 5, 6 |
| Spring holders | 7, 8 |
| Coil | 9 |
| Coil terminals | 9a |
| Coil bobbin | 10 |
| Rocking edges | 11, 12 |
| Inlet port | 13 |
| Outlet ports | 14, 15 |

The actuator of Fig 1 represents a new type of pulse driven bistable device where movement of a ferromagnetic armature (2) is restricted to one plane by spring extensions (5, 6) anchored in two non-magnetic holders (7, 8) and by two rocking edges (11, 12) formed inside a bobbin (10). The armature will stay in one or the other of two stable positions determined by the poles A and D, or B and C. A permanent magnet (1) provides a static magnetic flux and a rocking movement is produced by altering the polarity of the armature and the balance between the magnetic flux linking the poles and the opposite ends of the armature.

This is achieved by coil (9) fitted around the armature (2) which creates a local magnetic field when a short pulse of electric current flows through the coil. In one direction this reinforces the flux so keeping the armature in its last position, (in contact with poles B and C as shown). The other direction of current flow reverses the magnetic polarity of the armature, and sufficiently reduces the flux linking the armature to the one set of poles (B and C as shown) to cause the armature to flip into its other stable position in contact with poles A and D.

The magnetic force of repulsion (from poles B and C) and attraction (towards poles A and D) is initially assisted by the spring force stored in 5 and 6. Movement is therefore very rapid since there is maximum force acting on the armature at the beginning of each rocking movement and in this way a very short actuator reaction time can be achieved.

As the armature moves through its mid position the spring force acting on the armature and hitherto accelerating the armature away from one set of poles towards the other set, reduces to zero and then reverses and acts to resist movement of the armature towards the other set of poles. This tends to decelerate the armature as it moves towards the other set of poles.

In this way the impact between armature and poles is reduced as the former flips from one position to the other.

By not anchoring one of the springs the free spring end can be used to move something external to the device as shown in Fig 3.

For example the free end can be used to open and close a valve as shown in Figs 4 and 5. The balanced and well-defined magnetic and spring forces secure bi-stable operation. In this way both valve positions (opened and closed) are maintained by magnetic force rather than relying on spring force, and short reaction time, low energy (current) consumption and long life span is nevertheless obtained. There is a great variety of external devices which can be controlled by a device such as shown in Fig 2. Examples are as follows:-

Thus Fig 4 shows the actuator of Fig 3 operating a high pressure valve, which is self-sealing under pressure from a chamber (not shown) into which or from which fluid flows. This configuration can be used to control inlet and/or exhaust valves in an internal combustion engine, so obviating the need for a camshaft. The fluid flow denoted in Fig 4 is illustrative of an inlet valve. The flow direction arrows would be reversed in the case of an exhaust valve

In Fig 5 the actuator of Fig 3 is shown operating a dosing valve, which also self-seals under pressure from a supply source connected to the inlet. This configuration can be used to digitally control the supply of gases or liquids e.g. drinks dispensers, fuel cells, oxygen supply to a patient and many more.

The actuator of Fig 3 can be used as an active flow mixer, flow direction controller, where for example two different fluids are to be mixed in a controllable manner e.g. in a direct digital jet engine noise control system or when an incoming fluid needs to be directed one way or another i.e. fuel supply modulation in gas turbines.

Figs 1 and 6 show how the armature itself can serve as a valve closing device by forming passages in the poles C and D which communicate with ports 14 and 15 in Fig 1, and 16 and 17 in Fig 6.

In the case of Fig 1 a further port 13 serves as an inlet port and movement of the armature 2 connects the inlet port 13 either to port 14 (as shown) or in its other position (in contact with poles A and D) to port 15. In this case ports 14 and 15 constitute outlet ports and the valve is a diverter valve for conveying fluid from 13 either to outlet 14 or 15.

If port 15 in Fig 1 (or 17 in Fig 6) is blocked off, the valve becomes a simple ON/OFF fluid flow control valve which in one position allows fluid flow between ports 13 and 14 (as shown) (or 16 and 18 in Fig 6) (or vice versa) and in the other position inhibits fluid flow therebetween.

In Fig 6 the same reference numerals as employed in Figs 1 and 2 are used to denote the permanent magnet 1, and the magnetic pole-pieces 3 and 4 which protrude inwardly to define poles C and D. Each is formed with a through bore 16A and 17A respectively and all are housed in housing members 19 and 19A. The latter are formed from non-magnetic material and serve to enclose the actuator and valve.

A coil 9 wound on a bobbin 9A is located between the two pairs of poles A, B and C, D and surrounds the armature designated 20 in Fig 6, where instead of being located by one or more leaf springs 5, 6 and rocking anvils 11, 12 as in Figs 1 and 3, the armature 20 is shown pivoted about a pin 22.

Seals 24, 26 surround the junctions between the pole pieces 3, 4 and housing members 19A, 19B to prevent loss of fluid from the ports and passages 16, 16A and 17, 17A.

Cylindrical passages 28, 30 in the pole pieces 3, 4 respectively serve to locate and house cylindrical inserts 32, 34 of magnetisable material, which protrude into the interior of the device to form magnetic poles A, B at one end of the armature, in a similar way as do the hollow protrusions of the pole-pieces forming magnetic poles C, D at the other end of the armature.

Within the hollow interiors of the pole inserts 32, 34 are located spring units 36, 38 respectively. Each unit comprises a thin walled cylindrical shell 40,(42) within which a compression spring 44,(46) is held captive between an end stop 48,(50) at the outboard end of the shell 40,(42) and a ball 52,(54) itself held captive within the shell at the inboard end thereof.

As shown in Fig 6, when the armature is attracted towards pole A, the captive ball 54 in shell 42 protrudes beyond the end face of the pole insert 34 under the action of the spring 46, but is prevented from leaving the shell 42 by virtue of a necked region 43 at the inboard end of the shell 42 (best seen is the enlarged scrap section of Fig 6A).

However when the armature 20 flips into its other position, it engages the ball 54 as it moves beyond its mid position and begins to compress the spring 46 through the ball, so disengaging the ball 54 from the neck 43 as it moves into closure with the inboard end of the insert 34 forming pole B.

Compressing the spring 46 converts some of the kinetic energy of the moving armature into potential (spring) energy which will remain stored in the spring while the armature remains in contact with pole B.

Of course the reverse applies to the spring 44 associated with insert 32 of pole A. With the armature 29 in the position shown in Fig 6, energy is stored in the compressed spring 44 and as soon as the magnetic flux linking armature and poles creates magnetic attraction and repulsion forces to flip the armature 20 into its other position (in contact with poles B and C), the stored energy is available to accelerate the armature 20 away from pole A towards pole B.

As the armature leaves pole A, ball 52 is allowed to move under the action of the spring 44, into its fully protruding position (similar to that occupied by ball 54 in Fig 6A), where it is retained by an annular neck 45 similar to 43 shown in Fig 6A.

The annular necks 43, 45 may be continuous rings of material around the end of the shells 40, 42 or may comprise segments of annular rings in the form of claws similar to those employed to hold a precious stone in a ring.

Likewise the end stops 48, 50 at the other ends of the shells 40, 42 may be solid end walls or a necked region which will not permit the spring to leave the shell, a plurality of claws as aforesaid, or simply one or more bars extending across the open end of the shell.

To facilitate assembly the end stop 58,(50) may be formed after the ball and spring have been inserted into the shell.

Each magnetisable insert 32,(34) may be held in place by screw threaded engagement between it and its pole-piece 3,(4) or by an interference fit and/or by an annular shoulder 56,(58) between a larger diameter inboard end region forming the pole A,(B) and a smaller diameter section which extends through the passage 28,(30) in the pole-piece 3,(4). The outboard end may be flanged as by a metal pressing action during manufacture to form an annular flange 60,(62). As shown these are accommodated in annular cutaways in the outer faces of the pole-pieces 3, 4 to trap the smaller diameter section of the insert 32,(34) between inner and outer faces of the respective pole-piece 3,(4).

As with the necked regions 43, 45 the flanges 60, 62 need not be continuous but may comprise a plurality of radially formed fingers which to facilitate insertion of the insert into the passage 28,(30) are internally formed as axially extending castellations around the end of the insert, but can be forced during manufacture into the annular cutaway in the outer face of the pole-piece 3,(4) into which the insert has been pushed.

The balls 52, 54 are shown as spherical and the distance by which they protrude toward the armature 20 is governed at least in part by the diameter of the opening in the necked end 43,(45) of the shell 40,(42) and the position of that necked end relative to the end face of the pole A,(B).

If the balls 52, 54 are to protrude to a greater axial extent than is obtainable by using spherical balls, they can be replaced by non-spherical balls which may be egg-shaped or even cylindrical with a region of reduced diameter adapted to protrude through the necked opening 45,(43) and a larger diameter region held captive between the end of the spring 44,(46) and the neck 45,(43) respectively. Alternatively the balls may be replaced by conical or more preferably frusto-conical members, the larger diameter ends of which cannot pass through the necked regions 45,(43) respectively.

The magnitude and duration of the acceleration (or deceleration) forces acting on the armature due to the release (or storage) of spring force is adjustable by selecting the springs according to the desired spring rate required, and the distance by which the balls 52, 54 (or other devices) protrude beyond the end faces of the poles A, B. in this way the free travel of the armature when it is not in contact with either of the balls 52 and 54 (or other devices) can be adjusted.

Fine adjustment may be provided for by tapping the bores 28, 30 and forming a complementary screw thread profile on the outer surfaces of the shells 40, 42 and screwing the shells more or less into the bores. To this end the housing members 19, 19A may be formed with similar bores 28A, 30A (which need not be tapped) through which the shells 40, 42 can be passed to engage in the tapped bores 28, 30 and the outer ends of the shells 40, 42 are conveniently formed with screwdriver slots or other rotational drive engaging means to allow them to be screwed into the desired position in the pole inserts 32, 34.

Although necked regions 43, 45 may be provided in the ends of the shells 40, 42 respectively, the necking may instead be provided by radially protruding fingers or a radially protruding annular rim in the end of the bores 28,(30) in the pole inserts 32,(34) respectively.

The removal of the shells, springs and balls through the bores 28A, 30A, enables the springs and balls (or other armature engaging devices between the springs and armature) to be replaced when worn, or replaced on a planned maintenance basis. However appropriate selection of materials for the balls (or other devices) and the armature, or by coating the latter (at least where it impacts the balls or other devices) with a suitable wear resistant material, in combination with the soft landings created by the spring force decelerating the armature as it approaches closure with one pole or the other, has been found to extend the life of the device almost indefinitely.

A push rod is shown in dotted outline at 47 extending through port 17 and passage 17A for communicating movement of the armature externally of the device.

Actuators constructed substantially as shown in the drawings have achieved over three billion complete cycles (i.e. six billion movements) without any perceived wear and without interruption. This success is attributed to the soft landings of the armature on the respective poles due to the conversion of kinetic energy into potential energy as the armature moves through and beyond its mid-position and the spring effect that has been accelerating the armature away from one pole towards the other through its mid-position, reverses and begins to decelerate the armature as it leaves the mid-position and starts to move towards the other pole.

By careful selection of magnetic force and spring force, so the arrival of the armature on each pole at the end of its travel from one to the other can be virtually without impact.

Furthermore, by careful selection of spring material so that the distortion of the resilinet material providing the spring force is well within its elastic limits, the material, is not unduly stressed in operation so that fatigue will not be a factor in the life of the resilient material forming the spring.

## Claims

1. An actuator which includes a bi-stable rocking armature (2; 20; 100) which is movable between two home positions each defined by a pair of poles (A,D - B,C; 134, 140 - 136, 138), by altering magnetic flux created by at least one permanent magnet (1; 112, 114) and linking the armature and the poles when it occupies one of its home positions, so as to cause the armature to rock like a see-saw into the other of its two home positions, in each of which a closed low reluctance path (1, 3, 2, 4; 1, 3, 20, 4; 122, 128, 124, 120) for the magnetic flux linking the armature and two of the poles is created, the permanent magnetic flux alone which links the armature in either home position, being sufficient to cause the armature to remain in that position in contact with those two poles until the flux linking the armature to those two poles is altered so as to cause the armature to disengage therefrom and see-saw over to the other two poles, where it will remain due to the closed low reluctance path now established with these other two poles, **characterised by** compressible energy converting and storing means (5, 6; 44, 46; 162, 164), which in use during the final movement of the armature into contact with the poles is compressed and converts some of the kinetic energy of the armature into potential energy and stores the potential energy while the armature remains in contact with the poles in either home position, to be available to exert an accelerating force on the armature in a direction away from that home position towards its other home position when the magnetic flux linking the armature is altered to allow this to happen.

2. An actuator as claimed in claim 1 wherein the deformable energy converting and storing means comprises two resiliently deformable devices one of which is deformed in use to store energy therein as the armature moves into engagement with one pair of poles, and the other of which is deformed in use to store energy therein as the armature moves into engagement with the other pair of poles.

3. An actuator as claimed in claim 2 wherein the energy converting and storing means is housed in recesses (28, 30; 166, 168) in two of the poles.

4. An actuator as claimed in claim 3 wherein a thrust member is housed in each recess and protrudes from the face of the pole, which in use will be engaged by the armature and pushed into its recess to compress the resiliently energy converting storing means therein as the armature approaches the pole.

5. An actuator as claimed in claim 4 wherein the armature movement is transmitted by means of push rod means (47) which is engageable by the armature during movement of the latter, and which extends through one or more passages in the poles.

6. An actuator as claimed in claim 5 wherein a passage containing the push rod means also contains a compressible spring, and the push rod means extends through and is linked to the spring to be urged by the spring towards the armature, and stop means prevents the push rod means from following the armature in use all the way to its mid position between the poles so that the armature is free of spring influence over part of its travel between poles.

7. An actuator as claimed in claim 6 wherein the compressible spring serves as a deformable energy converting and storing means.

8. An actuator as claimed in any of claims 1 to 7 in which the or each permanent magnet forms part of the armature, or part of the low reluctance path outwith the armature.

9. An actuator as claimed in any of claims 1 to 8 wherein the flux alteration required in use to effect the changeover of the armature from one pole to the other is effected by causing a short pulse of current to flow through an electromagnet winding (9; 126) which influences the flux linking the armature and the poles, the direction of the current in each pulse to effect each changeover being selected accordingly.

10. An actuator as claimed in claim 9 wherein the permanent magnet, armature, pole pieces and electromagnet, are contained within a housing.

11. An actuator as claimed in claim 10 wherein the housing is formed from magnetisable material and comprises part of the magnetic flux path.

12. An actuator as claimed in claim 1 wherein the energy converting and storing means acts between the armature and a fixed point, on or in the housing or a member attached to the housing or comprising at least one of the poles, or the resilient energy storage means is carried by and extends from the armature or is attached to and extends from at least one of the poles.

13. A fluid flow control valve in which an armature (2; 20) is mounted for pivoting relative to four similar pole-pieces (AD - BC) arranged in two pairs, associated with opposite ends of the armature, each pair presenting a North and South pole to the armature, and in which the two pairs are arranged symmetrically about the central pivoting axis (22) of the armature, and the armature is located in a fluid tight chamber to which or from which fluid can flow via a first passage (13; 18), wherein the armature comprises the fluid flow controlling device and in use can adopt either of two home positions in each of which it is held in contact with two of the pole pieces by magnetic flux provided solely by permanent magnet means, and wherein the armature is caused to pivot from one home position to the other by temporarily altering the magnetic flux linking the armature and the poles so that the armature is repelled from poles with which it is in contact and attracted to poles defining the other home position, and wherein a second fluid passage (14; 16A) is provided through one of the poles which communicates with an opening in the face of that pole, which opening is covered by the armature so as to prevent fluid flow between the second passage and the chamber when the armature is in one of its two home positions but is uncovered to permit fluid flow through the second passage when the armature occupies its other home position, and wherein each of the four poles has a similar opening therein so that the four pole faces have a similar magnetic cross-section **characterised by** compressible energy converting and storing means (5, 6; 44, 46), which in use during the final movement of the armature into contact with the poles is compressed and converts some of the kinetic energy of the armature into potential energy and stores the potential energy while the armature remains in contact with the poles in either home position, to be available to exert an accelerating force on the armature in a direction away from that home position towards its other home position when the magnetic flux linking the armature is altered to allow this to happen.

14. A valve as claimed in claim 13 wherein there is provided a third fluid passage (15; 17A) leading to the opening in one of the other poles, which other pole opening will be covered in use when the armature occupies its said other home position.

## Patentansprüche

1. Antrieb, welcher einen bistabilen Kippsprunganker (2; 20; 100) aufweist, der zwischen zwei Ruhelagen, die jeweils durch ein Polpaar (A,D - B,C; 134, 140-136, 138) festgelegt sind, durch Änderung eines durch zumindest einen Permanentmagneten (1; 112, 114) erzeugten magnetischen Flusses, der den Anker und die Pole verbindet, wenn er eine seiner Ruhelagen einnimmt, verstellbar ist, so dass bewirkt wird, dass der Anker wie eine Wippe in die andere seiner beiden Ruhelagen umspringt, in welchen jeweils ein geschlossener magnetischer Pfad (1, 3, 2, 4; 1, 3, 20, 4; 122, 128, 124, 120) mit einem niedrigen magnetischen Widerstand für den den Anker und zwei der Pole verbindenden magnetischen Fluss erzeugt ist, wobei der permanente magnetische Fluss für sich genommen, welcher den Anker in jeder Ruhelage verbindet, ausreichend ist, um zu bewirken, dass der Anker in der Lage in Kontakt mit denjenigen beiden Polen verbleibt, bis der Fluss, welcher den Anker mit diesen beiden Polen verbindet, so verändert wird, dass **dadurch** eine Einwirkung auf den Anker zur Ablösung davon und zum Umspringen auf die anderen Pole erzeugt wird, wo er auf Grund des geschlossenen magnetischen Pfades mit niedrigem magnetischen Widerstand, der nun mit diesen anderen Polen gebildet ist, verbleibt, **gekennzeichnet durch** eine kompressible, Energie umwandelnde und speichernde Vorrichtung (5, 6; 44, 46; 162, 164), welche bei Betrieb in der Endbewegung des Ankers zum Kontakt mit den Polen komprimiert wird und einiges der kinetischen Energie des Ankers in potenzielle Energie umwandelt und die potentielle Energie speichert, während der Anker in Kontakt mit den Polen in jeder Ruhelage bleibt, um zur Verfügung zu stehen, eine beschleuigende Kraft auf den Anker in einer Richtung von der Ruhelage aus zu seiner anderen Ruhelage hin auszuüben, wenn der magnetische Fluss, welcher den Anker verbindet, zu einer Ermöglichung dieses Vorgangs geändert wird.

2. Antrieb nach Anspruch 1, wobei die deformierbare, Energie umwandelnde und speichernde Vorrichtung zwei elastisch deformierbare Einrichtungen aufweist, von denen eine bei Betrieb deformiert wird, um darin Energie zu speichern, wenn sich der Anker zum Eingriff mit einem Polpaar verstellt, und die andere von diesen bei Betrieb deformiert wird, um darin Energie zu speichern, wenn sich der Anker zum Eingriff mit dem anderen Polpaar verstellt.

3. Antrieb nach Anspruch 2, wobei die Energie umwandelnde und speichernde Vorrichtung in Ausnehmungen (28, 30; 166, 168) in zwei der Pole angeordnet ist.

4. Antrieb nach Anspruch 3, wobei ein Druckstück in jeder Ausnehmung angeordnet ist und von der Frontseite des Pols hervorsteht, welcher bei Betrieb mit dem Anker in Eingriff steht und in seine Ausnehmung geschoben wird, um die elastisch Energie umwandelnde speichernde Vorrichtung darin zu komprimieren, wenn sich der Anker dem Pol nähert.

5. Antrieb nach Anspruch 4, wobei die Ankerbewegung mittels einer Schubstangeneinrichtung (47), welche mit dem Anker während einer Bewegung des letzteren in Eingriff bringbar ist, und welche sich durch eine oder mehrere Durchführungen in den Polen hindurch erstreckt.

6. Antrieb nach Anspruch 5, wobei eine Durchführung, welche die Schubstangeneinrichtung enthält, auch eine komprimierbare Feder aufweist, und wobei sich die Schubstangeneinrichtung durch die Feder hindurch erstreckt und mit dieser verbunden ist, um von der Feder gegen den Anker drückbar zu sein, und wobei eine Halteeinrichtung die Schubstangeneinrichtung bei Betrieb daran hindert, dem Anker den gesamten Weg zu seiner mittleren Lage zwischen den Polen zu folgen, so dass der Anker von einer Beeinflussung durch die Feder über einen Teil seines Verstellwegs zwischen Polen frei ist.

7. Antrieb nach Anspruch 6, wobei die komprimierbare Feder als eine deformierbare, Energie umwandelnde und speichernde Vorrichtung dient.

8. Antrieb nach einem der Ansprüche 1 bis 7, in welchem der oder jeder Permanentmagnet einen Teil des Ankers oder einen Teil des magnetischen Pfades mit niedrigem magnetischen Widerstand außerhalb des Ankers bildet.

9. Antrieb nach einem der Ansprüche 1 bis 8, wobei die bei Betrieb erforderliche Flussänderung zur Auslösung des Umspringens des Ankers von einem Pol zu dem anderen durch Herbeiführung eines Fließens eines kurzen Stromimpulses durch eine elektromagnetische Wicklung (9; 126) verursacht wird, welcher auf den den Anker und die Pole verbindenden Fluss einwirkt, wobei die Richtung des Stroms bei jedem Impuls zur Bewirkung jedes Umspringens entsprechend ausgewählt ist.

10. Antrieb nach Anspruch 9, wobei der Permanentmagnet, der Anker, die Polteile und der Elektromagnet innerhalb eines Gehäuses aufgenommen sind.

11. Antrieb nach Anspruch 10, wobei das Gehäuse aus einem magnetisierbaren Werkstoff geformt ist und einen Teil des magnetischen Flusspfades aufweist.

12. Antrieb nach Anspruch 1, wobei die Energie umwandelnde und speichernde Vorrichtung zwischen dem Anker und einem festen Punkt auf oder in dem Gehäuse oder einem Bauteil, welches an dem Gehäuse angebracht ist oder zumindest einen der Pole aufweist, wirksam ist, oder wobei die elastische Energiespeichervorrichtung von dem Anker getragen wird und sich vom Anker her erstreckt oder zumindest an einem der Pole angebracht ist und sich davon her erstreckt.

13. Fluid-Durchflussregelventil bzw. -steuerventil, in welchem ein Anker (2; 20) zu einer Verschwenkung relativ zu vier ähnlichen, in zwei Paaren angeordneten Polstücken (AD - BC), welche mit gegenüber liegenden Enden des Ankers verbunden sind, angeordnet ist, wobei jedes Paar einen Nord- und Südpol zu dem Anker darstellt, und in welchem die zwei Paare symmetrisch zu der zentralen Schwenkachse (22) des Ankers angeordnet sind, und wobei der Anker in einer fluiddichten Kammer angeordnet ist, in welche oder aus welcher Fluid über einen ersten Durchgang (13; 18) strömen kann, wobei der Anker die Fluid-Durchflussregeleinrichtung bzw. -steuereinrichtung aufweist und bei Betrieb eine von zwei Ruhelagen einnehmen kann, wobei er in jeder von beiden in Kontakt mit zwei der Polstücke durch magnetischen Fluss, welcher nur von Permanentmagneteinrichtungen geliefert wird, gehalten ist, und wobei eine Verschwenkung des Ankers von einer Ruhelage in die andere durch vorübergehende Änderung des magnetischen Flusses, welcher den Anker und die Pole verbindet, bewirkt wird, so dass der Anker von Polen abgestoßen wird, mit denen er in Kontakt steht, und von Polen angezogen wird, welche die andere Ruhelage festlegen, und wobei durch einen der Pole hindurch ein zweiter Fluiddurchgang (14; 16A) vorgesehen ist, welcher mit einer Öffnung in der Vorderseite des Pols kommuniziert, wobei die Öffnung von dem Anker so abgedeckt ist, um eine Fluidströmung zwischen dem zweiten Durchgang und der Kammer zu verhindern, wenn sich der Anker in einer seiner zwei Ruhelagen befindet, aber nicht abgedeckt ist, um eine Fluidströmung durch den zweiten Durchgang zu gestatten, wenn der Anker seine andere Ruhelage einnimmt, und wobei jeder der vier Pole eine ähnliche Öffnung darin aufweist, so dass die vier Polvorderseiten einen ähnlichen magnetischen Querschnitt aufweisen, **gekennzeichnet durch** eine kompressible, Energie umwandelnde und speichernde Vorrichtung (5, 6; 44, 46), welche bei Betrieb in der Endbewegung des Ankers zum Kontakt mit den Polen komprimiert wird und einiges der kinetischen Energie des Ankers in potenzielle Energie umwandelt und die potentielle Energie speichert, während der Anker in Kontakt mit den Polen in jeder Ruhelage bleibt, um zur Verfügung zu stehen, eine beschleuigende Kraft auf den Anker in einer Richtung von der Ruhelage aus zu seiner anderen Ruhelage hin auszuüben, wenn der magnetische Fluss, welcher den Anker verbindet, zu einer Ermöglichung dieses Vorgangs geändert wird.

14. Ventil nach Anspruch 13, wobei in ihm ein dritter Durchgang (15; 17A) vorgesehen ist, welcher zu der Öffnung in einem der anderen Pole führt, wobei die weitere Polöffnung bei Betrieb abgedeckt ist, wenn der Anker seine andere Ruhelage einnimmt.

## Revendications

1. Actionneur qui comprend un induit oscillant bistable (2 ; 20 ; 100) qui est mobile entre deux positions de repos définies chacune par une paire de pôles (A, D - B, C ; 134,140 - 136, 138), en modifiant un flux magnétique créé par au moins un aimant permanent (1 ; 112, 114) et en reliant l'induit et les pôles quand il occupe une de ses position de repos, de manière à forcer l'induit à osciller comme une bascule dans l'autre de ses positions de repos, dans chacune desquelles un parcours fermé à faible reluctance (1, 3, 2, 4 ; 1, 3, 20, 4 ; 122, 128, 124, 120) pour le flux magnétique reliant l'induit et deux des pôles est créé, le flux magnétique permanent seul qui relie l'induit dans l'une ou l'autre position de repos étant suffisant pour forcer l'induit à rester dans cette position en contact avec ces deux pôles jusqu'à ce que ce flux reliant l'induit à ces deux pôles soit modifié de manière à forcer l'induit à se dégager de ceux-ci et à basculer sur les deux autres pôles, où il restera en raison du parcours fermé à faible reluctance maintenant établi avec ces deux autres pôles, **caractérisé par** un moyen d'emmagasinage et conversion d'énergie compressible (5, 6 ; 44, 46 ; 162, 164), qui en service, durant le mouvement final de l'induit en contact avec les pôles, est compressé et convertit une partie de l'énergie cinétique de l'induit en énergie de potentiel et emmagasine l'énergie de potentiel alors que l'induit reste en contact avec les pôles dans l'une ou l'autre position de repos, pour qu'elle soit disponible pour exercer une force d'accélération sur l'induit dans une direction s'éloignant de cette position de repos vers son autre position de repos quand le flux magnétique reliant l'induit est modifié pour permettre que ceci se produise.

2. Actionneur selon la revendication 1, dans lequel le moyen d'emmagasinage et conversion d'énergie déformable comprend deux dispositifs déformables élastiquement, dont l'un est déformé en service pour emmagasiner de l'énergie à l'intérieur lorsque l'induit vient en engagement avec une paire de pôles et dont l'autre est déformé en service pour emmagasiner de l'énergie à l'intérieur lorsque l'induit vient en engagement avec l'autre paire de pôles.

3. Actionneur selon la revendication 2, dans lequel le moyen d'emmagasinage et conversion d'énergie est logé dans des évidements (28, 30 ; 166, 168) dans deux des pôles.

4. Actionneur selon la revendication 3, dans lequel un élément de poussée est logé dans chaque évidement et fait saillie de la face du pôle, lequel sera engagé en service par l'induit et poussé dans son évidement pour comprimer le moyen d'emmagasinage de conversion d'énergie élastique à l'intérieur lorsque l'induit s'approche du pôle.

5. Actionneur selon la revendication 4, dans lequel le mouvement d'induit est transmis par l'intermédiaire d'un moyen de poussoir (47) qui peut être engagé par l'induit durant le mouvement de ce dernier et qui s'étend à travers un ou plusieurs passages dans les pôles.

6. Actionneur selon la revendication 5, dans lequel un passage contenant le moyen de poussoir contient également un ressort compressible et le moyen de poussoir s'étend à travers et est relié au ressort pour être poussé par le ressort vers l'induit, et un moyen d'arrêt empêche le moyen de poussoir de suivre l'induit en service tout au long jusqu'à sa position centrale entre les pôles de manière que l'induit soit libre de l'influence du ressort sur une partie de sa course entre des pôles.

7. Actionneur selon la revendication 6, dans lequel le ressort compressible sert comme un moyen d'emmagasinage et conversion d'énergie.

8. Actionneur selon l'une quelconque des revendications 1 à 7, dans lequel le ou chaque aimant permanent forme une partie de l'induit ou une partie du parcours à faible reluctance en dehors de l'induit.

9. Actionneur selon l'une quelconque des revendications 1 à 8, dans lequel la modification de flux nécessaire en service pour effectuer la commutation de l'induit d'un pôle à l'autre est effectuée en forçant une courte impulsion de courant à circuler à travers un enroulement d'électroaimant (9 ; 126) qui influence le flux reliant l'induit et les pôles, la direction du courant dans chaque impulsion pour effectuer chaque commutation étant sélectionnée en conséquence.

10. Actionneur selon la revendication 9, dans lequel l'aimant permanent, l'induit, les pièces polaires et l'électroaimant sont contenus dans un boîtier.

11. Actionneur selon la revendication 10, dans lequel le boîtier est formé à partir de matériau magnétisable et comprend une partie du parcours de flux magnétique.

12. Actionneur selon la revendication 1, dans lequel le moyen d'emmagasinage et conversion d'énergie agit entre l'induit et un point fixe, sur ou dans le boîtier ou un élément fixé au boîtier ou comprenant au moins un des pôles, ou le moyen d'emmagasinage d'énergie élastique est porté par et s'étend à partir de l'induit ou est fixé à et s'étend à partir d'au moins un des pôles.

13. Vanne de régulation d'écoulement de fluide dans laquelle un induit (2 ; 20) est monté pour pivoter par rapport à quatre pièces polaires similaires (AD - BC) agencées en deux paires, associées avec des extrémités opposées de l'induit, chaque paire présentant un pôle nord et sud à l'induit, et où les deux paires sont agencées symétriquement autour de l'axe central de rotation (22) de l'induit, et l'induit est situé dans une chambre étanche de fluide vers laquelle ou de laquelle un fluide peut s'écouler via un premier passage (13 ; 18), dans laquelle l'induit constitue le dispositif de régulation d'écoulement de fluide et, en service, peut prendre l'une ou l'autre de deux positions de repos dans chacune desquelles il est maintenu en contact avec deux des pièces polaires par un flux magnétique fourni seulement par des moyens d'aimant permanent, et dans laquelle l'induit est forcé à pivoter d'une position de repos à l'autre en modifiant temporairement le flux magnétique reliant l'induit et les pôles de manière que l'induit soit repoussé loin de pôles avec lesquels il est en contact et attiré vers des pôles définissant l'autre position de repos, et dans laquelle un deuxième passage de fluide (14 ; 16A) est prédisposé à travers un des pôles, lequel communique avec une ouverture dans la face de ce pôle, laquelle ouverture est recouverte par l'induit de manière à empêcher le fluide de s'écouler entre le deuxième passage et la chambre quand l'induit est dans une de ses deux positions de repos mais n'est pas recouverte pour permettre au fluide de s'écouler à travers le deuxième passage quand l'induit occupe son autre position de repos, et dans laquelle chacun des quatre pôles a une ouverture similaire dans celui-ci de manière que les quatre faces de pôle aient une coupe magnétique similaire, **caractérisé par** un moyen d'emmagasinage et conversion d'énergie compressible (5, 6 ; 44, 46), qui en service, durant le mouvement final de l'induit en contact avec les pôles, est compressé et convertit une partie de l'énergie cinétique de l'induit en énergie de potentiel et emmagasine l'énergie de potentiel alors que l'induit reste en contact avec les pôles dans l'une ou l'autre position de repos, pour qu'elle soit disponible pour exercer une force d'accélération sur l'induit dans une direction s'éloignant de cette position de repos vers son autre position de repos quand le flux magnétique reliant l'induit est modifié pour permettre que ceci se produise.

14. Vanne selon la revendication 13, dans laquelle est prédisposé un troisième passage de fluide (15 ; 17A) conduisant à l'ouverture dans un des autres pôles, laquelle autre ouverture de pôle sera recouverte en service quand l'induit occupera sa dite autre position de repos.
